# EUROPEAN PATENT SPECIFICATION

(11) **EP 2 092 714 B1**
(45) Date of publication and mention of the grant of the patent: **15.09.2010**
(21) Application number: 07827080.8
(22) Date of filing: 28.11.2007
(51) Int. Cl.: H04W 12/06, H04L 29/06, H04W 48/00

(54) **METHOD and device FOR FAST HANDOVER AND AUTHENTICATION IN A PACKET DATA NETWORK**
VERFAHREN UND VORRICHTUNG FÜR SCHNELLES WEITERREICHEN UND AUTHENTIFIZIERUNG IN EINEM PAKETDATENNETZ
PROCÉDÉ et dispositif POUR TRANSFERT ET AUTHENTIFICATION RAPIDES DANS UN RÉSEAU DE DONNÉES EN PAQUETS

(30) Priority: 04.12.2006 US 566456
(43) Date of publication of application: 26.08.2009
(73) Proprietor: Telefonaktiebolaget LM Ericsson (publ), 164 83 Stockholm (SE)
(72) Inventor: KRISHNAN, Suresh, Montreal, Québec H3C 6S3 (CA)
(74) Representative: Schmelcher, Thilo
(86) International application number: PCT/IB2007/054831
(87) International publication number: WO 2008/068672

(56) References cited:
- EP-A- 1 422 875
- GB-A- 2 409 377
- US-A1- 2004 014 422

## Description

### Background of the invention

### Field of the invention

The invention relates to a method and apparatus for authenticating a user equipment (UE) in a packet data network.

### Description of the Related Art

A Wireless Local Area Network (WLAN) is a Local Area Network (LAN) to which a mobile user can connect through a wireless (radio) connection. The Institute of Electrical and Electronics Engineers (IEEE) has defined several sets of standard specifications, such as for example 802.11, 802.16, and 802.20, that specify the technologies to be used for WLANs. For example, in the set of standard specifications 802.11, there are currently four specifications: 802.11, 802.1 a, 802.1 1b, and 802.11g, all of which are published by the IEEE. All four use the Ethernet protocol and CSMA/ CA (Carrier Sense Multiple Access with Collision Avoidance) for path sharing.

WLANs are deployed in different public places such as shopping mall, hotels or airports. A WLAN allows a user of a device having a wireless client (laptop or desktop computer equipped with PC or PCI cards) to access a plurality of services. More particularly, PC or PCI cards receive radio signals from an access point with which it communicates and translates that signal into digital data that PCs can understand. In the WLAN, access points are provided for granting access to the user.

Access points are hard-wired to a LAN. Using an ordinary RJ-45 cable, it is possible to connect an access point to a wired LAN such as an Ethernet network. Also, Access points can be described as software that run on a server, however the vast majority of access points are separate pieces of hardware. Access points translate digital data from the network into radio signals that wireless clients can understand for providing services to a user, while within the coverage of the WLAN.

A Multi-Access Environment solution defines an integration of a WLAN and a third generation (3G) digital cellular network such as CDMA2000 or UMTS (Universal Mobile Telecommunication System), which are fully integrated for data/voice transmission. Therefore, a 3G network's operator can offer WLAN services to their subscribers and this depending on their location. However, WLAN access and 3G networks' access are completely independent access technologies. For that reason, 3G networks require a complement for deploying a WLAN hotspot coverage within the broader 3G wide area coverage and for allowing mobile users to roam from a WLAN to a 3G network and vice versa. For doing so, the Multi-Access Environment solution uses Mobile IP.

In a Multi-Environment, the AP also communicates via a connection with an authentication server located in the home 3G WWAN of the UE 5 for authentication purposes. The authentication server is responsible for authenticating and authorizing subscriber accessing the network. For example in CDMA2000 network and WLAN accesses, the authentication also serves as a repository for accounting data. The authentication server contains profile of data entries for every subscriber registered in the 3G WWAN. The authentication server and a gateway node, which interworks between the 3G WAN and the WLAN, are ultimately connected via IP connections and to an IP network such as Internet for providing IP services to the UE (e.g. Internet access). It has been stated that the UE may roam back and forth from the WLAN to the 3G WWAN. It can also be understood that the UE may roam in a visited network (not shown) of the 3G WWAN. More particularly, when the UE is roaming in the visited network of the 3G WWAN, the authentication server authenticates the UE via a Foreign authentication server (not shown) located in the visited network where the UE is roaming. Following this, accounting information is sent back to its home billing system (not shown).

The European application EP 1422875 describes a system for hand-over in a wireless network during real-time communication. Terminal authorization packets are sent from the authentication server to the access points, which send an authentication challenge to the user equipment entering their coverage. The response sent by the terminal is transmitted to the authentication server for validation.

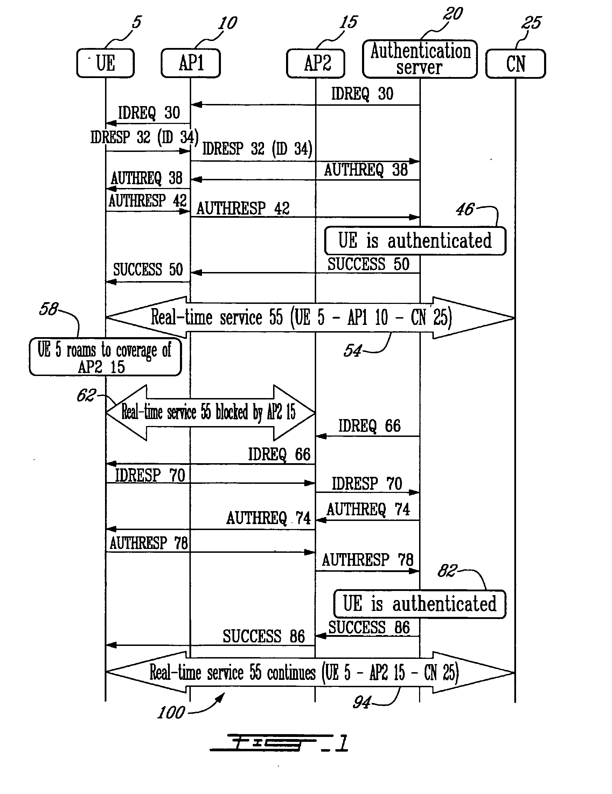

Reference is now made to on Figure 1, which is a message flow diagram of a method for authenticating a user equipment (UE) 5 in a packet data network 100. It is assumed that the UE 5 has already sent a start message (service request message not shown) for requesting the access to a real-time service 55 to the AP1 10, which has in turn requested the identity of the UE 5 with an IDREQ 30. The UE 5 replies with a response (IDRESP 32) that contains its identity (ID 34) and the AP1 10 forwards the ID 34 to an authentication server 20, which can be an Authentication, Authorization and Accounting (AAA) server. The authentication server 20 determines that the UE 5 is allowed to receive the requested services and sends an AUTHREQ 38 to the UE 5 for requesting the UE 5 credentials in order to authenticate the UE 5. The UE 5 then receives the AUTHREQ message 38 and responds to the authentication server 20 with an AUTHRESP 42 including its credentials. The authentication server 20 is then capable of determining that the UE 5 is authorized to receive a real-time service 55 and sends a SUCCESS message 50 for confirming that the UE 5 is an authorized UE (step 46). Upon reception of the SUCCESS message 50, the AP1 10 places the UE 5 in an authorized state and traffic for the real-time service 55 is allowed to proceed between the UE 5, the AP1 10 and a corresponding node (CN) 25 (step 54).

When the UE 5 moves from the AP1 to another AP2 15 (step 58), the UE 5 needs to be re-authenticated at the second AP2 15. If the UE 5 is performing the real-time service 54, the service has to be interrupted (step 62) while the UE 5 waits for the authentication process to complete successfully (messages and steps 66 to 86) before continuing the real-time service 55 between the UE 5 and the CN 25 (step 94). Messages and steps 66 to 86 are similar to messages and steps 30 to 50 respectively and can be repeated during a predetermined period of time until the UE 5 is authenticated.

As shown in Figure 1, the method requires the AP2 15 to go back at least two times to the authentication server before completing successfully the authentication of the UE 5. Most of the time the authentication server is located in the home network a delay for authenticating the UE 5 encounter delays that can be unreasonably large (few seconds) for real-time service applications like Voice over Internet Protocol (VoIP), Gaming, IPTV, etc.

For these reasons, there is a need to provide a method for performing an efficient and secure handoff and authentication of a UE in a packet data network when the UE is involved in a real-time service.

### Summary of the Invention

It is a broad aspect of the present invention to provide a method for providing real-time service access to a user equipment (UE) in a packet data network, the method comprising the steps of:
receiving, at an access point (AP), an authentication information message from an authentication server, the authentication information message including an identity of the UE involved in a real-time service with a corresponding node and information data for authenticating the UE at the AP;
   The information data further comprising a verification function;
   Storing, in a memory unit of the AP, the verification function and the identity of the UE;
detecting, at the AP, that the UE enters a zone coverage of the AP;
   Processing at the AP, the verification function and the identity of the UE for generating a puzzle for the UE
sending a puzzle from the AP to the UE;
receiving, at the AP from the UE, an answer for the puzzle;
verifying, at the AP, the received answer;
authenticating the UE at the AP; and
allowing the UE to continue the real-time service with the corresponding node.
It is another broad aspect of the present invention to provide an access point (AP) for authenticating a user equipment (UE) in a packet data network, the AP comprising:
   an input/output (I/O) unit for receiving an authentication information message from an authentication server, the authentication information message including an identity of the UE involved in a real-time service with a corresponding node and information data for authenticating the UE at the AP; the information data further comprising a verification function; and a processor for storing the verification function and the identity of the UE in a memory unit of the AP, and
   for detecting that the UE enters a zone coverage of the AP, and for processing the verification function and the identity of the UE for generating a puzzle for the UE;
   wherein the I/O unit sends a puzzle from the AP to the UE and receives from the UE, an answer for the puzzle and upon reception of an answer for the puzzle from the UE, the processor verifies the received answer authenticates the UE and allows the UE to continue the real-time service with the corresponding node.

### Brief Description of the Drawings

The foregoing and other aspects, features, and advantages of the invention will be apparent from the following more particular detailed description as illustrated in the accompanying drawings in which reference characters refer to the same parts throughout the various views. The drawings are not necessarily to scale, emphasis instead being placed upon illustrating the principles of the invention.
Figure 1 is a message flow diagram of a method for authenticating a User Equipment (UE) in accordance to the prior art;
Figure 2 is a schematic diagram illustrating a packet data network in accordance to the invention;
Figure 3 is a message flow diagram of a method for authenticating an UE in accordance to the invention;
Figures 4A is a flow chart of a method for authenticating an UE in accordance to the invention;
Figures 4B is a flow chart of a method forrevokingan authentication for an UE in accordance to the invention;
Figure 5 is illustrating a list of Access Points (APs) to where a UE is already authenticated in accordance to the invention; and
Figure 6 is illustrating a list of UEs associated to a particular AP.

### Detailed Description of the Preferred Embodiments

In the following description, for purposes of explanation and not limitation, specific details are set forth such as particular architectures, interfaces, techniques. In order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

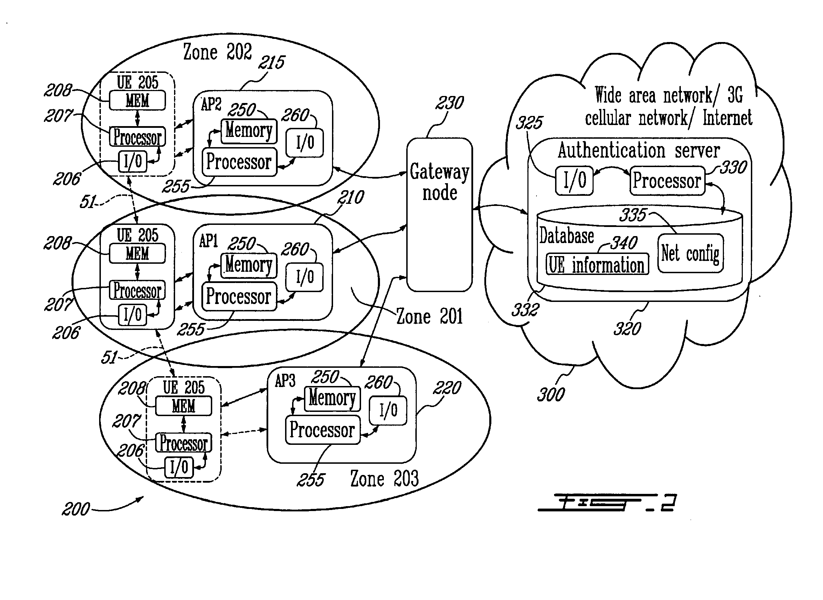

Reference is now made to Figure 2, which is a schematic diagram illustrating a packet data network 200 in accordance to the invention. The packet data telecommunication network 200 may be any network that can provide packet data services to the roaming User Equipment (UE) 205. The network 200 is divided into zones where each of these zones is served by at least one an access point (AP) for providing packet data radio access to a roaming UE 205. The UE 205 can be any mobile equipment that is adapted to receive packet data services (real-time services) such as Voice over Internet Protocol (VoIP). The UE 205 comprises an input/output (I/O) unit 206 for receiving and sending information from an AP or other network elements in the network 200 or 300, a processor 207 for operating the UE 205, processing the received information and generating sent messages. The UE 205 also comprises a memory 208 for storing information that can be accessed by the processor 207. The UE 205 can be wirelessly connected or physically connected to one of the APs (AP1 210, AP2 215, AP3 220).

In particular, the UE 205 refers to a device that is operable on a cellular network, or a Voice-Over IP (VoIP) network such as Session Initiated Protocol (SIP), or a Wireless Local Area Network (WLAN) using an 802.11 x protocol, or any combination thereof. It can be understood that the present invention is not limited to VoIP services,Gaming or IPTV, and it should be clear that any real-time packet data service that can be provided by the present network 200 is also encompassed.

The network 200 is divided into packet data zones or cells in which the UE 205 may roam. In Figure 2, the UE 205 roams from zone 201 to a second zone (zone 202 or zone 203) along line 51 and request packet data access to services available in the network 300. It can be understood that the network 200 is a simplified network and that the network 200 may comprise more than the three zones 201, 202 and 203 which are served by AP1 210, AP2 215 and AP3 220 respectively. AP1 210, AP2 215 and AP3 220 each comprises aninput/output (I/O) unit 260 for receiving information from the network 200 and for sending information to the network 200, a processor 255 for operating the AP and generating messages, a memory 250 for storing information received from network elements in the network 200 or 300 and that can be accessed by the processor 255.

AP 1 210, AP2 215 and AP3 220 are connected to a Gateway Node 230, which acts as a Gateway Node between a Wide Area Network (WAN) 300 and the UE 205. The Gateway Node 230 can be an access server or any network element that can provide interworking function between two different networks. The WAN 300 can be the Internet or any third generation (3G) cellular network such as 3G Universal Mobile Telecommunications Systems (3G UMTS) network such as a CDMA2000 network, a Wideband Code Division Multiple Access (WCDMA) network, a Global System for Mobile Communications/Enhanced Data for GSM Evolution (GSM/EDGE) or a High Speed Packet Data Access (HSPDA) network. The WAN 300 comprises an authentication server 320 for authenticating and authorizing the UE 205 to access the WAN 300.The authentication server 320authenticates and authorizes the UE 205 to operate in the network 200. The authentication server 320 further provides user profile information 340 to the gateway 230 and ultimately an AP serving the UE 205 and stores accounting data regarding registered UE in the network 300 in the database 332.

The authentication server 320 comprises an input/output (I/O) unit 325 for receiving information from the network 200 and for sending information to the network 200, a processor 330 for operating the authentication server 320 and generating messages sent from the server 320, a database 332 for storing information that can be accessed by the processor 330. The database 332 comprises a network configuration repository 335 for storing the association of each AP and each gateway of the network 200. The database 332 also comprises UE information 340 that correlate information like the identity of a UE, the timestamp associated to a puzzle sent from an AP and the result of the authentication process between an AP and the UE. The authentication server 320 can be, while not being limited to, an authentication, authorization and accounting (AAA) server or a Remote Authentication Dial In User Service (RADIUS).The database 332, the memory 250 and the memory 208 may be any persistent memory like a Read-Only Memory (ROM), a Structured Query Language (SQL) database or a Flash memory. The processors 330, 255 and 207 can be hardware, software, or any combination thereof.

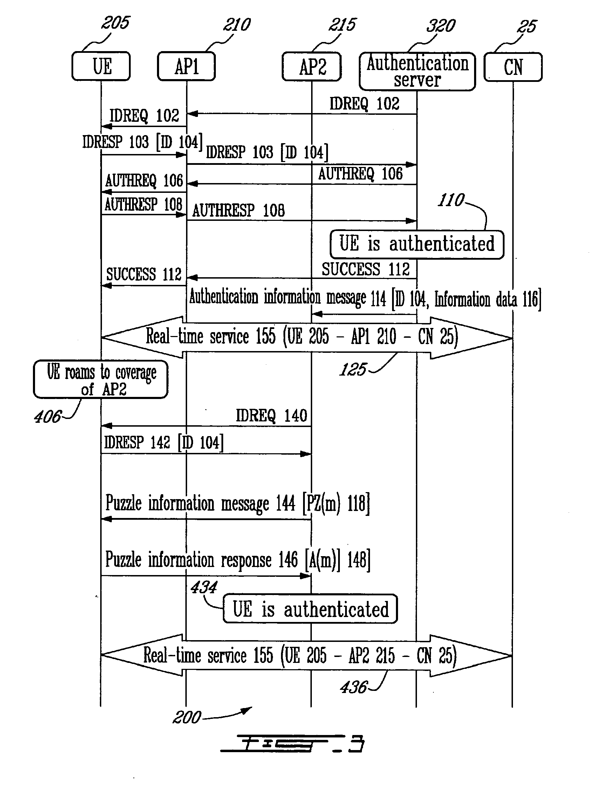

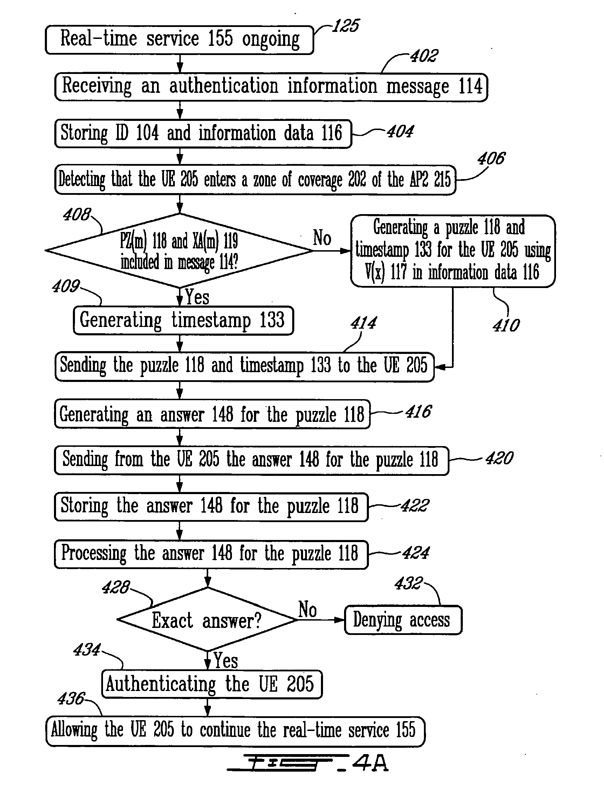

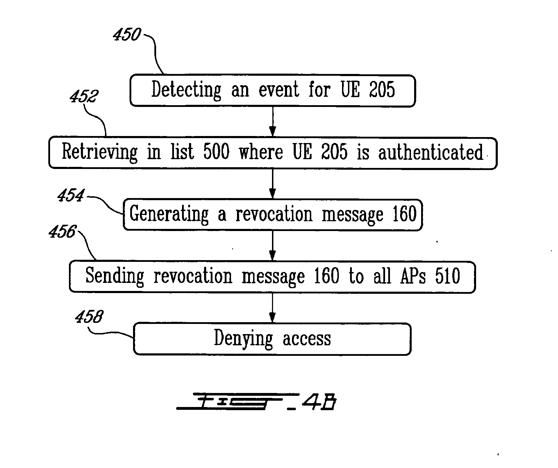

Reference is now made to Figure 3, which isa message flow diagram of a method for authenticating the UE 205, and to Figure 4A, which is flow chart of a method for authenticating the UE 205 in accordance to the invention. It is assumed that the UE 205 has already sent a start message (service request message not shown) for requesting the access to a real-time service 155 to the AP1 210, which has in turn requested the identity of the UE 5 with an IDREQ 102. The UE 205 replies with a response (IDRESP 103) that contains its identity (ID 104) and the AP1 210 forwards the ID 104 to an authentication server 320. The authentication server 320 determines that the UE 205 is allowed to receive the requested services and sends an AUTHREQ 106 to the UE 205 for requesting the UE 205 credentials in order to authenticate the UE 205. The UE 205 then receives the AUTHREQ message 106 and responds to the authentication server 320 with an AUTHRESP 108 including its credentials (not shown). The authentication server 320 is then capable of determining that the UE 205 is authorized to receive the real-time service 155 (step 110) and sends a SUCCESS message 112 for confirming that the UE 205 is an authorized UE. Upon reception of the SUCCESS message 112, the AP1 210 places the UE 205 in an authorized state and traffic for the real-time service 155 is allowed to proceed between the UE 205, the AP1 210 and a corresponding node (CN) 25 (step 125).

Following the authentication of step 125, the authentication server 320 informs neighboring APs of AP1 210 where the UE 205 has first access the real-time service. The neighboring APs are determined as follows: each access point APx has 'n' geographically adjacent access points called AP(x,1, 1..n) where AP(x,y,z) is the 'z'th access point which is separated 'y' levels from Access point 'x' where the UE 205 first gets authenticated. Using the proposed scheme the authentication server 320 informs the neighboring access points AP(x,1..r,1..n) that the UE 205 has been authenticated. The number of levels of access points that can be informed 'r' can be configured in the network configuration 325.

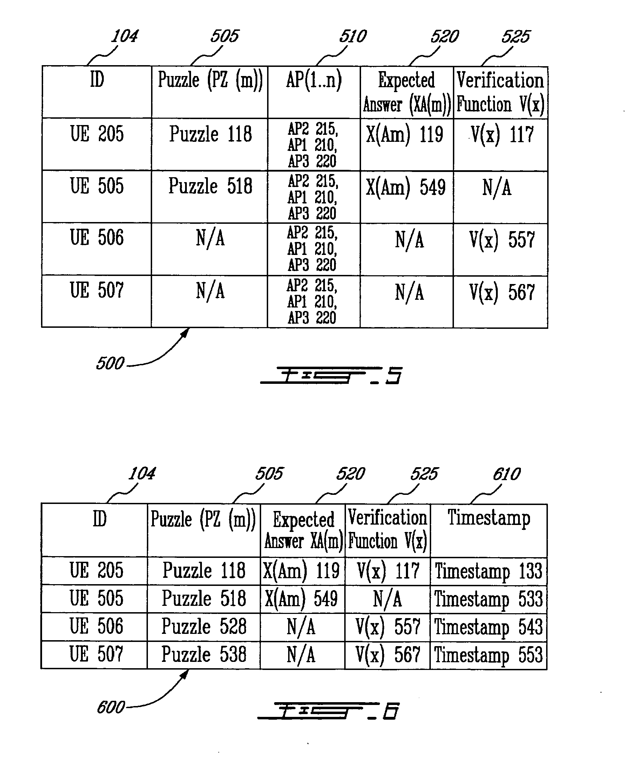

The authentication server 320 informs neighboring APs (AP2 215; AP3 220) by sending an authentication information message 114 that contains the ID 104 of the UE 205 involved in a real-time service 55 with a Corresponding node 25 and Information data 116. The information data 116 can be any of the following: a verification function V(x) 117, a puzzle PZ(m) 118 and an expected answer XA(m) for the puzzle 118. The ID 104 of the UE 205 can be, while not being limited to, an International Mobile Subscriber Identity (IMSI), a username or a Network Access Identifier (NAI). The verification function V(x) 117 can be for example a Digital Signature Algorithm (DSA) as defined in NIST FIPS 186. The puzzle 118 can be a token or challenge (packet data code or plain text), which needs to be operated by the UE 205, and the expected answer 119 may be any answer in the same format of the puzzle 118. At step 402, the AP2 215 receives the authentication information message 114. The AP2 215 stores the ID 104 and the V(x) 117 associated to the ID 104 for further use when the UE 205 tries to be authenticated with its identity ID 104 (step 404). Reference is now made to Figure 5, which represent a list 500 of UEs and the APs to which an authentication information message was sent for a particular UE. The list 500 is stored at the database 332 and includes: identities 104 of UEs, puzzle 505 sent for each UEs (if applicable), expected answer 520 (if applicable), verification function 625 (if applicable) and the AP 510 to which an authentication information message was sent for a particular UE. Reference is also made to Figure 6, which is a list 600 of UEs associated to a particular AP (e.g. AP2 215) and the content of the information data 116: puzzle 505 received from the authentication server 320 or generated at the AP2 215, expected answer 520 (if applicable), verification function 525 (if applicable) and timestamp 610 received at the AP2 215. The authentication server 320 sends either the verification function 525 or the puzzle 505 and expected answer 520 to the AP2 215. In Figure 6, the verification function 525, the puzzle 505 and the expected answer 520 are listed for the UE 205 only for representing the probable the content of the information data 116, which is determined at step 408.

When the AP2 215 detects that the UE 205 enters its zone of coverage (step 406), the AP2 215 determines whether the puzzle 118 and the expected answer 119 are included in the information data 116 (step 408) and stored in list 600. If it is the case, the AP2 215 generates a timestamp 133 to be associated to the puzzle 118 (step 409). However, if the puzzle 118 and the expected answer 119 are not included, the AP2 215 processes the V(x) 117 and generates a random puzzle PZ(m) 118 (step 410). This provides a replay protection since the timestamp cannot be replicated the puzzle then cannot be duplicated.

When the UE 205 initiates the authentication procedure when responding to an IDREQ 140 with an IDRES 142 the AP2 215 sends to the UE 205 a puzzle information message 146 including the PZ(m) 118 and requests the UE 205 to solve the PZ(m) 118 (step 414). At step 416, the UE 205 runs processes the PZ(m) 118 and the timestamp 133 and generates an answer A(m) 148. The UE 205 sends the answer 148 to the AP2 215 in a puzzle information response 146 (step 420).

After receiving the answer A(m) 148 from the UE 205, the AP2 215 stores the received answer 148 in the memory 250 (step 422). If the expected answer 119 is included in the information data 116, the AP2 215 processes and compares the received answer A(m) 148 and the expected answer XA(m) 119 (step 424).

Alternatively, if the expected answer 119 was not included in the information data 116 or for other reasons the AP2 215 can verify the answer 148 of the UE 205 using the V(x) 117. The authentication server 320 may only send the verification function 525 for avoiding a processing overload of the authentication server 320, which can occur if the authentication server 320 has to send the puzzle 505 and the expected answer 520 to a large number of APs. Since this is a zero knowledge proof that a fraudulent user is listening on the link will not gain any additional information. The AP2 215 process V(A(m)) at step 424 for determining that the received answer is an exact answer for the PZ(m) 118 (step 428). If the answer A(m) 148 is an exact answer for the PZ(m) 118, the AP2 215 authenticates the UE 205 (step 434) and allows the UE 205 to continue the real-time service 155 with no further authentication needed from the authentication server (step 436). The AP2 215 may also initiate a new accounting session on behalf of the UE 205 towards an authentication server 320. However, if the answer A(m) 148 is not a valid answer of if the time for the UE 105 to send the answer A(m) 148 is exceeded, the AP2 215 denies network access to the UE 205 and the packet data for the real-time service are no longer transmitted to the UE 205.

At any time during the authentication process, the puzzle can be rendered obsolete when an event is detected at either the authentication server 320 or the AP2 215. The event can be for example a UE that has exceeded a timeout for responding to an authentication request or an identity request from an AP or the authentication server 320. The event can also be a termination of a service requested from a UE or simply a network management request (not shown) for terminating a service such as for prepaid service termination. In general, the event triggers the revocation of the pre-authentication provided with the sending of the authentication information message.

Reference is now made toFigures 4B is a flow chart of a method forrevokingan authentication for an UE in accordance to the invention. Steps 450 to 458 can occur at any time of the authentication process of Figures 3 and 4A. At step 450, an AP of network 200 or the authentication server 320 detects an event that occur for UE 205. Following this, the authentication server 320 retrieves in the list 500 the APs where the UE 205 was authenticated (step 452). The authentication server 320 generates (step 454) a revocation message 160 and sends the revocation message 160 to all APs 510 to which the UE 205 is authenticated. The authentication server 320 uses the network configuration 335 for retrieving the APs 510 IP addresses. The informed APs 510 then deny further access to a UE sending answer to the puzzle 118 (step 458).

It can be understood that some messages and therefore some parameters sent between network elements of the packet data network 200 are omitted for clarity reasons. More particularly, it should also be understood that Figures 2 and 3 depict a simplified packet data network 200, and that many other network elements have been omitted for clarity reasons only. Hence, the packet data network 200 may comprise more than the number of network elements present in the Figures. In the same line of thought, the packet data network 200 can be accessed by more than one UE and that a plurality of UEs can access simultaneously the packet data network 200.

While the invention has been particularly shown and described with reference to the preferred embodiments thereof, it will be understood by those skilled in the art that various alterations may be made therein without departing from scope of the invention.

## Claims

1. A method for providing real-time services access to a user equipment (UE) in a packet data network, the method comprising the steps of:
- receiving, at an access point (AP), an authentication information message from an authentication server, the authentication information message including an identity of the UE involved in a real-time service with a corresponding node and information data for authenticating the UE at the AP, the information data further comprising a verification function;
- storing, in a memory unit of the AP, the verification function and the identity of the UE;
- detecting, at the AP, that the UE enters a zone coverage of the AP;
- processing, at the AP, the verification function and the identity of the UE for generating a puzzle for the UE;
- sending the puzzle from the AP to the UE;
- receiving, at the AP from the UE, an answer for the puzzle;
- verifying, at the AP, the received answer;
- authenticating the UE at the AP; and
- allowing the UE to continue the real-time service with the corresponding node.

2. The method of claim 1, wherein the step of receiving the answer for the puzzle includes the step of:
- processing, the puzzle at the UE;
- generating, at the UE, the answer for the puzzle to be sent to the AP; and
- storing the received answer in the memory unit of the AP.

3. The method of claim 1, wherein the step of sending includes the steps of:
- generating a timestamp for the puzzle at the AP; and
- sending the timestamp with the puzzle from the AP to the UE.

4. The method of claim 1, wherein the method further includes the steps of:
- using, at the AP, the verification function for processing the received answer;
- comparing the received answer and the processed answer; and
- determining that the received answer is an exact answer for the puzzle.

5. The method of claim 1, wherein the method further includes the steps of:
- sending the authentication information message from the authentication server to all neighboring APs in the packet data network;
- detecting an event to the UE at the authentication server, the event requiring revocation of a pre-authentication of the UE;
- retrieving, at the authentication server, the list of all neighboring APs to which the authentication message was sent; and
- sending a revocation message to all APs.

6. An access point (AP) for authenticating a user equipment (UE) in a packet data network, the AP comprising:
- an input/output (I/O) unit for receiving an authentication information message from an authentication server, the authentication information message including an identity of the UE involved in a real-time service with a corresponding node and information data for authenticating the UE at the AP, the information data further comprising a verification function; and
- a processor for storing the verification function and the identity of the UE in a memory unit of the AP, for detesting that the UE enters a zone coverage of the AP, and for processing the verification function and the identity of the UE for generating a puzzle for the UE;
- wherein the I/O unit sends the puzzle from the AP to the UE and receives from the UE, an answer for the puzzle; and
- wherein, upon reception of the answer for the puzzle from the UE, the processor verifies the received answer, authenticates the UE and allows the UE to continue the real-time service with the corresponding node.

7. The AP of claim 6, wherein the processor stores, in the memory unit of the AP, the answer for the puzzle received from the UE.

8. The AP of claim 6, wherein the processor generates a timestamp for the puzzle and sends the timestamp witch the puzzle from the I/O unit to the UE.

9. The AP of claim 6, wherein the processor uses the verification function for processing the received answer, compares the received answer and the processed answer and determines that the received answer is an exact answer for the puzzle.

## Patentansprüche

1. Verfahren zur Bereitstellung von Echtzeitdienstzugriff für eine Benutzereinrichtung (UE) in einem Paketdatennetz, wobei das Verfahren die folgenden Schritte umfasst:
- Empfangen an einem Zugangspunkt (AP) einer Authentifizierungsinformationsnachricht von einem Authentifizierungsserver, wobei die Authentifizierungsinformationsnachricht eine Kennung der UE, die an einem Echtzeitdienst mit einem entsprechenden Knoten beteiligt ist, und Informationsdaten zum Authentifizieren der UE am AP enthält, und die Informationsdaten ferner eine Verifizierungsfunktion umfassen;
- Speichern in einer Speichereinheit des APs der Verifizierungsfunktion und der Kennung der UE;
- Erkennen am AP, das die UE in einen Zonenversorgungsbereich des APs eintritt;
- Verarbeiten am AP der Verifizierungsfunktion und der Kennung der UE zum Erzeugen eines Puzzles für die UE;
- Senden des Puzzles vom AP an die UE;
- Empfangen am AP von der UE einer Antwort für das Puzzle;
- Verifizieren am AP der empfangenen Antwort;
- Authentifizieren der UE am AP; und
- Erlauben der UE, den Echtzeitdienst mit dem entsprechenden Knoten fortzusetzen.

2. Verfahren nach Anspruch 1, wobei der Schritt des Empfangens der Antwort für das Puzzle die folgenden Schritte umfasst:
- Verarbeiten des Puzzles an der UE;
- Erzeugen an der UE der an den AP zu sendenden Antwort für das Puzzle; und
- Speichern der empfangenen Antwort in der Speichereinheit des APs.

3. Verfahren nach Anspruch 1, wobei der Schritt des Sendens die folgenden Schritte umfasst:
- Erzeugen eines Zeitstempels für das Puzzle am AP; und
- Senden des Zeitstempels mit dem Puzzle vom AP an die UE.

4. Verfahren nach Anspruch 1, wobei das Verfahren ferner die folgenden Schritte umfasst:
- Verwenden am AP der Verifizierungsfunktion zum Verarbeiten der empfangenen Antwort;
- Vergleichen der empfangenen Antwort und der verarbeiteten Antwort; und
- Bestimmen, dass die empfangene Antwort eine richtige Antwort für das Puzzle ist.

5. Verfahren nach Anspruch 1, wobei das Verfahren ferner die folgenden Schritte umfasst:
- Senden der Authentifizierungsinformationsnachricht vom Authentifizierungsserver an alle benachbarten AP im Paketdatennetz;
- Erkennen eines Ereignisses für die UE am Authentifizierungsserver, wobei das Ereignis eine Widerrufung einer Vorauthentifizierung der UE erfordert;
- Abrufen am Authentifizierungsserver der Liste aller benachbarten AP, an welche die Authentifizierungsnachricht gesendet wurde; und
- Senden einer Widerrufungsnachricht an alle AP.

6. Zugangspunkt (AP) zum Authentifizieren einer Benutzereinrichtung (UE) in einem Paketdatennetz, wobei der AP umfasst:
- eine Eingangs-/Ausgangs (I/O)-Einheit zum Empfangen einer Authentifizierungsinformationsnachricht von einem Authentifizierungsserver, wobei die Authentifizierungsinformationsnachricht eine Kennung der UE, die an einem Echtzeitdienst mit einem entsprechenden Knoten beteiligt ist, und Informationsdaten zum Authentifizieren der UE am AP enthält, und die Informationsdaten ferner eine Verifizierungsfunktion umfassen;
- einen Prozessor zum Speichern der Verifizierungsfunktion und der Kennung der UE in einer Speichereinheit des APs, zum Erkennen, dass die UE in einen Zonenversorgungsbereich des APs eintritt, und zum Verarbeiten der Verifizierungsfunktion und der Kennung der UE zum Erzeugen eines Puzzles für die UE;
- wobei die I/O-Einheit das Puzzle vom AP an die UE sendet und von der UE eine Antwort für das Puzzle empfängt; und
- wobei bei Empfang der Antwort für das Puzzle von der UE der Prozessor die empfangene Antwort verifiziert, die UE authentifiziert und der UE erlaubt, den Echtzeitdienst mit dem entsprechenden Knoten fortzusetzen.

7. AP nach Anspruch 6, wobei der Prozessor in der Speichereinheit des APs die von der UE empfangene Antwort für das Puzzle speichert.

8. AP nach Anspruch 6, wobei der Prozessor einen Zeitstempel für das Puzzle erzeugt und den Zeitstempel mit dem Puzzle von I/O-Einheit an die UE sendet.

9. AP nach Anspruch 6, wobei der Prozessor die Verifizierungsfunktion zum Verarbeiten der empfangenen Antwort verwendet, die empfangene Antwort und die verarbeitete Antwort vergleicht und bestimmt, dass die empfangene Antwort eine richtige Antwort für das Puzzle ist.

## Revendications

1. Procédé pour fournir un accès de service en temps réel à un équipement d'utilisateur (UE) dans un réseau de données en paquets, le procédé comprenant les étapes consistant à :
- recevoir, au niveau d'un point d'accès (AP), un message d'information d'authentification provenant d'un serveur d'authentification, le message d'information d'authentification incluant une identité de l'UE impliquée dans un service en temps réel avec un noeud correspondant et des données d'information pour authentifier l'UE au niveau de l'AP, les données d'information comprenant en outre une fonction de vérification ;
- mémoriser, dans une unité de mémoire de l'AP, la fonction de vérification et l'identité de l'UE ;
- détecter, au niveau de l'AP, que l'UE entre dans une couverture de zone de l'AP ;
- traiter, au niveau de l'AP, la fonction de vérification et l'identité de l'UE pour générer un puzzle pour l'UE ;
- envoyer le puzzle de l'AP à l'UE ;
- recevoir, au niveau de l'AP en provenance de l'UE, une réponse au puzzle ;
- vérifier, au niveau de l'AP, la réponse reçue ;
- authentifier l'UE au niveau de l'AP ; et
- autoriser l'UE à poursuivre le service en temps réel avec le noeud correspondant.

2. Procédé selon la revendication 1, dans lequel l'étape de réception de la réponse au puzzle inclut l'étape consistant à :
- traiter le puzzle au niveau de l'UE ;
- générer, au niveau de l'UE, la réponse au puzzle à envoyer à l'AP ; et
- mémoriser la réponse reçue dans l'unité de mémoire de l'AP.

3. Procédé selon la revendication 1, dans lequel l'étape d'envoi inclut les étapes consistant à :
- générer un pointeur temporel pour le puzzle au niveau de l'AP ; et
- envoyer le pointeur temporel avec le puzzle de l'AP à l'UE.

4. Procédé selon la revendication 1, dans lequel le procédé inclut en outre les étapes consistant à :
- utiliser, au niveau de l'AP, la fonction de vérification pour traiter la réponse reçue ;
- comparer la réponse reçue et la réponse traitée ; et
- déterminer que la réponse reçue est une réponse exacte au puzzle.

5. Procédé selon la revendication 1, dans lequel le procédé inclut en outre les étapes consistant à :
- envoyer le message d'information d'authentification du serveur d'authentification à tous les APs voisins dans le réseau de données en paquets ;
- détecter un évènement à l'UE au niveau du serveur d'authentification, l'évènement requérant une révocation d'une pré-authentification de l'UE ;
- extraire, au niveau du serveur d'authentification, la liste de tous les APs voisins auxquels le message d'authentification a été envoyé ; et
- envoyer un message de révocation à tous les APs.

6. Point d'accès (AP) pour authentifier un équipement d'utilisateur (UE) dans un réseau de données en paquets, l'AP comrpenant :
- une unité d'entrée/ sortie (I/O) pour recevoir un message d'information d'authentification provenant d'un serveur d'authentification, le message d'information d'authentification incluant une identité de l'UE impliquée dans un service en temps réel avec un noeud correspondant et des données d'information pour authentifier l'UE au niveau de l'AP, les données d'information comprenant en outre une fonction de vérification ; et
- un processeur pour mémoriser la fonction de vérification et l'identité de l'UE dans une unité de mémoire de l'AP, pour détecter que l'UE entre dans une couverture de zone de l'AP, et pour traiter la fonction de vérification et l'identité de l'UE pour générer un puzzle pour l'UE ;
- dans lequel l'unité d'entrée/sortie envoie le puzzle de l'AP à l'UE et reçoit en provenance de l'UE une réponse au puzzle ; et
- dans lequel, lors de la réception de la réponse au puzzle en provenance de l'UE, le processeur vérifie la réponse reçue, authentifie l'UE et autorise l'UE à poursuivre le service en temps réel avec le noeud correspondant.

7. AP selon la revendication 6, dans lequel le processeur mémorise, dans l'unité de mémoire de l'AP, la réponse au puzzle reçue en provenance de l'UE.

8. AP selon la revendication 6, dans lequel le processeur génère un pointeur temporel pour le puzzle et envoie le pointeur temporel avec le puzzle de l'unité d'entrée/sortie à l'UE.

9. AP selon la revendication 6, dans lequel le processeur utilise la fonction de vérification pour traiter la réponse reçue, compare la réponse reçue et la réponse traitée et détermine que la réponse reçue est une réponse exacte pour le puzzle.
